**Europäisches Patentamt**

(19) **European Patent Office**

**Office européen des brevets**

(11) Numéro de publication: **0 082 054**
**B1**

(12) **FASCICULE DE BREVET EUROPEEN**

(45) Date de publication du fascicule du brevet:
**17.04.85**

(51) Int. Cl.⁴: **H 04 K 3/00,** H 04 B 7/26

(21) Numéro de dépôt: **82402218.0**

(22) Date de dépôt: **03.12.82**

(54) **Procédé de synchronisation des postes émetteurs-récepteurs d'un réseau à sauts de fréquence, et poste destiné à la mise en oeuvre de ce procédé.**

(30) Priorité: **15.12.81 FR 8123440**

(43) Date de publication de la demande:
**22.06.83 Bulletin 83/25**

(45) Mention de la délivrance du brevet:
**17.04.85 Bulletin 85/16**

(84) Etats contractants désignés:
**DE GB**

(56) Documents cités:
**DE - A - 1 817 118**
**FR - A - 2 479 620**
**FR - A - 2 498 035**

**IEEE NATIONAL TELECOMMUNICATIONS**
**CONFERENCE, San Diego, 2-4 décembre 1974, pages**
**536-542, New York, USA**

(73) Titulaire: **THOMSON-CSF, 173, Boulevard Haussmann,**
**F-75379 Paris Cedex 08 (FR)**

(72) Inventeur: **Rabain, Jacques, THOMSON-CSF**
**SCPI 173, bld Haussmann, F-75379 Paris Cedex 08 (FR)**
Inventeur: **Swaenepoel, Joseph, THOMSON-CSF**
**SCPI 173, bld Haussmann, F-75379 Paris Cedex 08 (FR)**

(74) Mandataire: **Turlèque, Clotilde et al, THOMSON-CSF**
**SCPI 173, Bld Haussmann, F-75379 Paris Cedex 08 (FR)**

BUNDESDRUCKEREI BERLIN

# Description

La présente invention concerne la synchronisation des émetteurs-récepteurs d'un réseau à sauts de fréquence et les émetteurs-récepteurs destinés à la mise en œuvre du procédé.

Dans un réseau de postes émetteurs-récepteurs fonctionnant sur des fréquences porteuses variant par sauts à un rythme donné, pour protéger le réseau contre l'interception et le brouillage par un tiers non destinataire, la fréquence porteuse, permettant aux émetteurs-récepteurs de ce réseau de communiquer entre eux, doit être modifiée simultanément dans tous les postes. Généralement, la protection contre l'interception est renforcée par le chiffrement des informations transmises et un changement concerté, pendant l'exploitation, du chiffre utilisé.

Dans ce mode de transmission dit à évasion de fréquence (EVF), le changement de fréquence et de chiffre est assuré d'une manière identique sur tous les postes du réseau par un dispositif équipant chaque émetteur-récepteur. Ce dispositif comporte un générateur de données aléatoires. Une série de ces données est convertie en fréquences, une autre série est convertie en codes de chiffres. Ce générateur, initialisé au départ, est rythmé par une horloge incluse dans le dispositif, et définit pour le réseau, une loi temporelle, dite de trafic, L déterminant à chaque instant une fréquence de transmission f et un chiffre c connu de tous et maintenus pendant la durée T d'un temps élémentaire ou palier de cette loi de trafic.

Pour une réception et un déchiffrement convenable des messages, un synchronisme précis des horloges des différents postes doit être réalisé. Si, pendant la transmission d'un appel, ce synchronisme peut être maintenu en se référant à l'allure logique du message chiffré comme décrit, par exemple, dans une demande de brevet français n° 8 007 015 (n° de publication 2 479 620) au nom de la Demanderesse, le cumul des dérives des horloges des différents postes pendant les temps de silence prolongés du réseau, nécessite l'utilisation de procédés assurant la réception d'un appel et permettant la synchronisation des horloges des postes appelés sur celle du poste appelant.

Le procédé selon l'invention permet de résoudre ce problème en assurant la rapidité de la prise de liaison et en maintenant la protection contre l'interception par un tiers non destinataire.

Selon l'invention, un procédé de synchronisation des postes émetteurs-récepteurs d'un réseau à sauts de fréquence dans lesquels les postes émetteurs-récepteurs communiquent sur des fréquences porteuses maintenues pendant des paliers de durée T prédéterminée, ces fréquences variant par seut d'un palier au suivant selon une loi aléatoire de trafic générée par des moyens identiques dans tous les postes, ces moyens de génération étant associés à des horloges locales, est principalement caractérisé en ce que, pendant une durée de silence du réseau, chaque poste établit à partir de la loi de trafic pilotée par son horloge locale des lois de veille successives synchrones $L_i$ ayant des durées de paliers multiples de la durée du palier T, $K_iT$, qui augmentent d'une loi à la suivante avec la durée de silence, et tels que

$$\frac{K_i}{K_{i-1}} = Q_i,$$

et en ce que pour l'établissement d'une communication, un poste en position d'appel émet une séquence d'appel comportant au moins un groupe de mots de synchronisation, ST, émis sur des fréquences porteuses correspondant aux paliers de sa loi de veille $L_i$ en cours, ayant une durée T et émis dans un intervalle T centré par rapport à la durée $K_iT$ du palier de la loi de veille en cours.

L'invention a également pour objet un poste émetteur-récepteur destiné à la mise en œuvre de ce procédé.

L'invention sera mieux comprise et d'autres détails apparaîtront à l'aide de la description qui suit en référence aux figures annexées.

Les figures 1 et 2 sont des diagrammes illustrant les différentes lois de sauts de fréquence, loi de trafic L et lois de veille $L_1$, $L_2$ ... $L_n$, utilisées dans le procédé.

La figure 3 est un diagramme illustrant le procédé de synchronisation suivant l'invention.

La figure 4 représente le schéma synoptique d'un émetteur récepteur pour la mise en œuvre du procédé.

Le procédé selon l'invention consiste pour le poste appelant à émettre une séquence de mots de synchronisation, à des instants déterminés dans le déroulement interne de la loi de trafic L constituant des repères de temps. Pour un poste en état de veille dont la loi de trafic risque d'être décalée par rapport à celle du poste appelant, le procédé consiste à établir des conditions d'écoute telles que la réception d'un mot de synchronisation à la fréquence à laquelle il est émis soit toujours possible et que le repère de temps qu'il représente permette la mesure du décalage temporel entre la loi de trafic du poste en état de veille d'une part et cette même loi dans le poste appelant d'autre part, cette mesure permettant au poste en état de veille, d'annuler ce décalage en synchronisant sa loi de trafic sur celle du poste appelant. Lorsque la séquence d'appel est terminée, le poste appelant et les postes en réception étant synchronisés, la transmission du message se fait sur une fréquence variant par sauts suivant la loi de trafic L qui est maintenue pendant toute la durée du message, pour tous les postes.

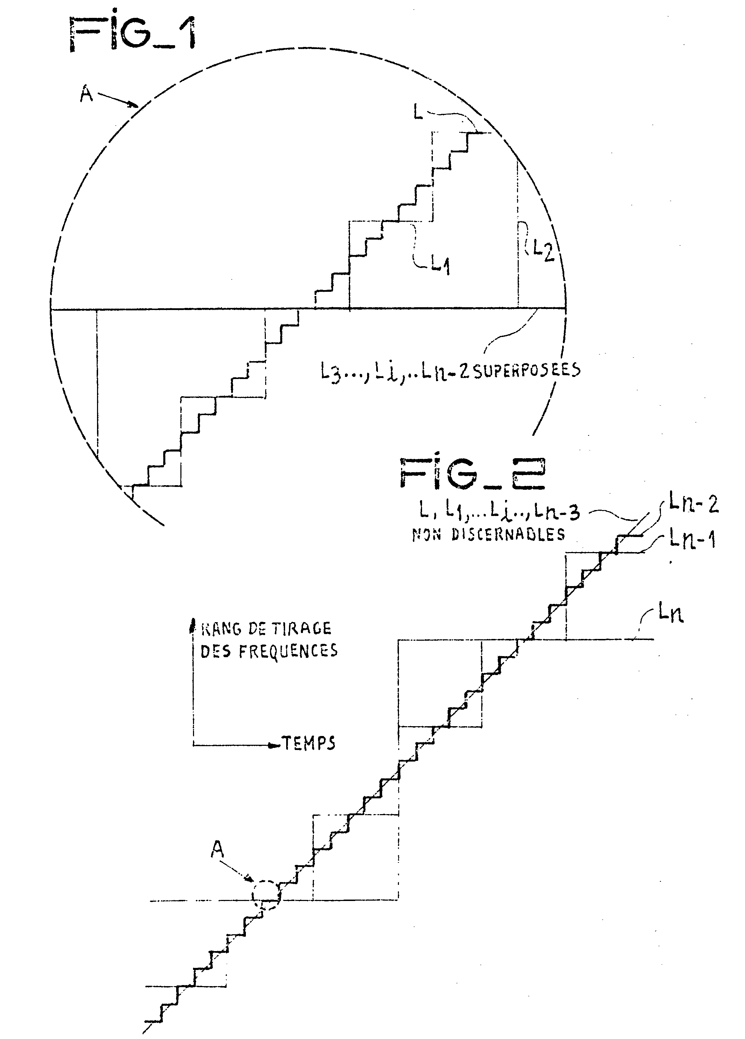

La figure 1 représente le déroulement de la loi L utilisée pendant une transmission. Cette loi est représentée sur la figure par le diagramme en escaliers ayant les paliers les plus courts, ces paliers ayant une durée égale à la période T de changement de fréquence. L'ordonnée dans ce diagramme est le rang du palier correspondant. Chaque palier a donc une durée représentant le temps élémentaire T pendant lequel est définie une donnée aléatoire L. Cette donnée aléatoire est convertie en fréquence d'émission ou de réception, et éventuellement en un code de chiffre. Lors de l'établissement d'une communication et pendant les périodes de veille, cette loi n'est pas utilisée directement mais sert de base pour établir respectivement les instants d'émission des séquences de mots de synchronisation par le poste appelant et les conditions d'écoute des récepteurs en état de veille. Pour cela, chaque poste établit à partir de sa loi de trafic L, n lois de veilles lentes dérivées de la loi de trafic L par sous-échantillonnage et donc synchronisées avec elle. Soient $L_1, L_2 \ldots L_i \ldots L_n$, ces lois de veille. Les longueurs des paliers de ces lois sont respectivement

$$K_1T < K_2T < \ldots < K_iT < \ldots \quad K_nT \quad K_i \text{ et } = Q_iK_{i-1}.$$

Les fréquences et les codes de chiffre d'une loi $L_i$ sont les fréquences et les codes de chiffre de la loi L tous les $K_iT$. Ces lois sont établies successivement dans les différents postes au fur et à mesure que le temps de silence, depuis la dernière émission dans le réseau, augmente.

En effet, soit $T_S$ la durée d'une période de silence pendant laquelle compte tenu de la stabilité des horloges des différents postes, ces postes dérivent de

$$t < \frac{K_iT}{2},$$

où t est l'écart relatif maximal en valeur absolue, entre deux postes quelconques du réseau. Si $\frac{\Delta F}{F}$ est la précision relative de l'oscillateur pilote,

$$T_S = K_iT / \frac{4\,\Delta F}{F} = T_i$$

est la période de silence maximale pour laquelle la dérive peut être rattrapée à partir de la loi de veille $L_i$. Cette période de silence maximale détermine les instants où le poste doit passer d'une loi de veille donnée à la loi de veille d'indice immédiatement supérieur. L'estimation de cette période peut varier d'un poste à l'autre et les postes du réseau peuvent à un instant donné avoir des lois de veille différentes.

La séquence de mots de synchronisation émise par un poste appelant à destination des autres postes du réseau permet la synchronisation des postes du réseau même si les lois de veille sont deux lois successives.

Ainsi est définie, pour l'état de veille en fonction du temps de silence, une loi à saut de fréquence $L_V$ dérivée de la loi L et constituée de la suite des lois $L_1, L_2, \ldots L_i \ldots L_n$. Une valeur élevée

de $K_i$ augmente la durée du décalage admissible maximum mais ralentit le rythme de la loi $L_v$ et allonge le temps de prise de liaison qui augmente donc avec le temps de silence du réseau.

Sur la figure 1 est représentée une loi $L_1$ pour laquelle $K_1 = 5$ et une loi $L_2$ pour laquelle $K_2 = 15$; les lois $L_3; \ldots L_i, L_n$ paraissent superposées.

La figure 2 représente les relations entre les lois de veille d'indices supérieurs $L_{n-2}, L_{n-1}$ et $L_n$, l'échelle de temps étant différente sur ces deux figures, avec

$$\frac{K_n}{K_{n-1}} = 3 \quad \text{et} \quad \frac{K_{n-1}}{K_{n-2}} = 5.$$

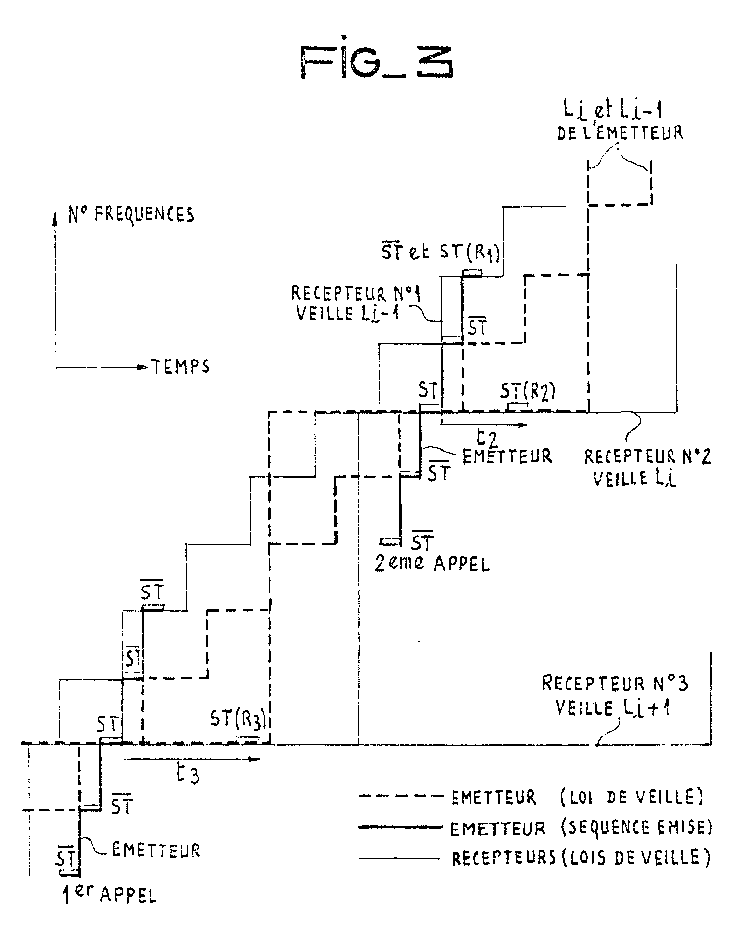

Le procédé de synchronisation suivant l'invention est illustré sur la figure 3. Un poste dit poste »émetteur« souhaite établir une communication à un instant donné. A cet instant la loi de veille de cet émetteur est $L_i$ en pointillés sur la figure, la loi de veille d'indice immédiatement inférieur $L_{i-1}$ ayant été également représentée en pointillés. Le poste émetteur émet une séquence de synchronisation comportant un mot de synchronisation ST émis sur un palier de durée T situé au milieu du palier de durée $K_iT$ de sa loi de veille, sur la fréquence $F_i$ correspondant à ce palier et chiffré selon le code correspondant à ce palier. Les coefficients $K_i$ sont choisis impairs pour repartir symétriquement par rapport aux paliers d'émission de durée T la durée d'un palier de veille.

Pour expliquer tous les cas possibles, on suppose que trois récepteurs n° 1, n° 2 et n° 3, dont les lois de veille sont, lors de l'établissement d'une communication, pour le premier la loi de veille $L_{i-1}$ d'indice immédiatement inférieur à celui de la loi $L_i$ de l'émetteur, pour le second la loi de veille $L_i$ de même indice, et pour le troisième la loi de veille $L_{i+1}$ d'indice immédiatement supérieur; ces lois de veille des récepteurs sont décalées par rapport à celles de l'émetteur de durées correspondant aux dérives.

Pour le second récepteur, décalé par rapport à l'émetteur d'une durée inférieure à la dérive maximum correspondant au temps de silence déterminant la loi de veille $L_i$, le mot de synchronisation ST émis au milieu du palier de la même loi de veille du récepteur est reçu sur le palier correspondant aux mêmes valeurs de fréquence et de chiffre.

Le mot de synchronisation ST reçu par le récepteur dans des conditions de fréquence et de chiffre attendues est démodulé, il se présente alors sous la forme d'un signal binaire identifiable par un corrélateur numérique dont le registre de référence est chargé à chaque début des paliers des lois de veille par le mot ST chiffré au code attendu. Le décalage entre l'instant d'identification de ce mot de synchronisation et sa position dans le temps lors de sa génération par le récepteur au milieu du même palier décalé est mesuré. Cette mesure est exprimée par un nombre M de paliers de durée élémentaire T et un reste R compté en nombre de bits de transmission. Un décalage de R bits des dispositifs fournissant des tops d'horloge du générateur de données aléatoires pilotant la loi de trafic L du récepteur, rétablit la concordance entre les transitions de la loi L correspondante et celles de la loi de trafic du poste appelant. Le rattrapage du nombre M de paliers est réalisé par des moyens permettant la distribution des données aléatoires de la loi L d'une manière anticipée ou retardée par rapport au déroulement normal de la loi L, ces moyens étant identiques à ceux utilisés pour l'établissement des lois de veille.

Cette détection et cette synchronisation entraînent la commutation de l'émetteur sur la loi de trafic L qui est maintenue pendant toute la durée du message. La réception d'un mot ST provoque donc la synchronisation d'un récepteur sur le poste appelant et constitue également l'information servant à mettre le récepteur dans les conditions d'écoute correspondant à la loi de trafic L pour une durée prédéterminée. L'émission périodique d'un mot ST pendant la transmission d'un message maintient le récepteur sur cette loi de trafic pendant toute la durée de cette transmission. La non réception de mots de synchronisation ST indique la fin du message au récepteur qui est alors placé dans des conditions d'écoute correspondant à la première loi de veille $L_1$.

Pour le troisième poste, dont la loi de veille lors de l'établissement de la communication est $L_{i+1}$, il est possible qu'une émission du mot de synchronisation ST ne suffise pas à établir la synchronisation. Le récepteur ne détecte un mot ST dans les conditions de fréquence et de chiffre de sa loi de veille que tous les $\dfrac{K_{i+1}}{K_i}$ paliers. Le mot de synchronisation ST doit donc être répété au moins $\dfrac{K_{i+1}}{K_i}$ fois à un rythme $K_i T$ pour qu'une détection du mot ST soit obtenue de façon certaine.

Bien que permettant la prise de liaison entre les postes d'un réseau dans la plupart des cas de dérive cumulée pendant de longues périodes de veille, le procédé selon l'invention, limité aux éléments décrits ci-dessus, peut être mis en défaut pour le premier récepteur dont la loi de veille est encore $L_{i-1}$ alors que l'émetteur a, à l'instant d'émission de l'appel, la loi $L_i$.

Le poste émetteur qui suit la loi $L_i$, émet des mots de synchronisation pendant les durées correspondant aux mi-temps des paliers de sa loi de veille, les mots ST émis ne pourront être reçus par le poste récepteur étant donné le décalage considéré. Pour pallier cette défaillance possible, lors d'une séquence d'appel, les mots ST émis au milieu d'un palier d'une loi de veille de rang i, sont accompagnés d'un second type de mot de synchronisation $\overline{ST}$. Si le rapport de la durée des paliers entre la loi $L_{i-1}$ et la loi $L_i$ est

$$Q_i = \frac{K_i}{K_{i-1}},$$

$Q_i - 1$ mots $\overline{ST}$ de durée T répartis de part et d'autre des instants d'émission des mots ST sont émis pendant les paliers de la loi $L_i$, avec les valeurs de fréquence et de chiffre correspondant aux paliers de veille de la loi d'indice immédiatement inférieur, mais rapprochés dans le temps par rapport au déroulement normal de cette loi de veille d'indice inférieur $L_{i-1}$ pour couvrir le palier de la loi de veille $L_i$. La redistribution dans le temps des valeurs de fréquence et de chiffre nécessaires à l'émission des mots $\overline{ST}$ est réalisée par les mêmes moyens que l'établissement des lois de veille. Cette suite de mots de synchronisation ... $\overline{ST}$, $\overline{ST}$, ST, $\overline{ST}$, $\overline{ST}$ ... forme une séquence d'appel.

A la réception, l'un des mots $\overline{ST}$ est reçu sur une fréquence porteuse et avec un code de chiffre qui coïncident avec ceux générés localement par le récepteur pendant l'une des périodes T en suivant les conditions normalement associées à la loi $L_{i-1}$. Il est alors démodulé, identifié par corrélation avec le mot $\overline{ST}$ correspondant, et utilisé de la même manière qu'un mot ST.

Pour un récepteur, la réception d'un mot $\overline{ST}$ indique donc que l'émetteur, au moment de l'émission, suivait la loi de veille d'indice supérieur à celui de la loi qu'il suivait lui-même. Les conditions de fréquence et de chiffre pour lesquelles le mot $\overline{ST}$ a été corrélé, identifient le mot émis dans la séquence d'émission, et définissent la référence de temps que le récepteur doit prendre en considération pour le rattrapage de la dérive cumulée.

Dans l'exemple de la figure 3 où la loi $L_i$ est la loi en cours dans l'émetteur, où

$$\frac{K_i}{K_{i-1}} = Q_i = 5,$$

et où

$$\frac{K_{i+1}}{K_i} = 3,$$

trois séquences d'appel au moins doivent être émises par l'émetteur (deux seulement ont été représentées), et chaque séquence doit comporter un mot de synchronisation ST émis au milieu du palier $L_i$ sur une durée T, et $Q_i - 1 = 4$ mots de synchronisation $\overline{ST}$ répartis de part et d'autre de ST, sur des paliers de durée T, sur les fréquences porteuses et avec les codes de chiffres déterminés par la loi $L_{i-1}$ de l'émetteur.

Les décalages mesurés par les récepteurs, qui permettent la synchronisation des horloges de ces récepteurs sont 0, $t_2$ et $t_3$ respectivement pour les premier, deuxième et troisième récepteurs pour le diagramme de la figure 3, le décalage nul correspondant à une différence entre les données émises $\overline{ST}$, et générées localement ST qui permet de déterminer que l'appel est centré sur la loi $L_i$ et non sur la loi $L_{i-1}$. Dans ce dernier cas, la synchronisation est obtenue par comptage du nombre de paliers de la loi de trafic L entre la fréquence centrale $F_i$ correspondant au milieu du palier le plus proche de la loi $L_i$ et la

fréquence reçue.

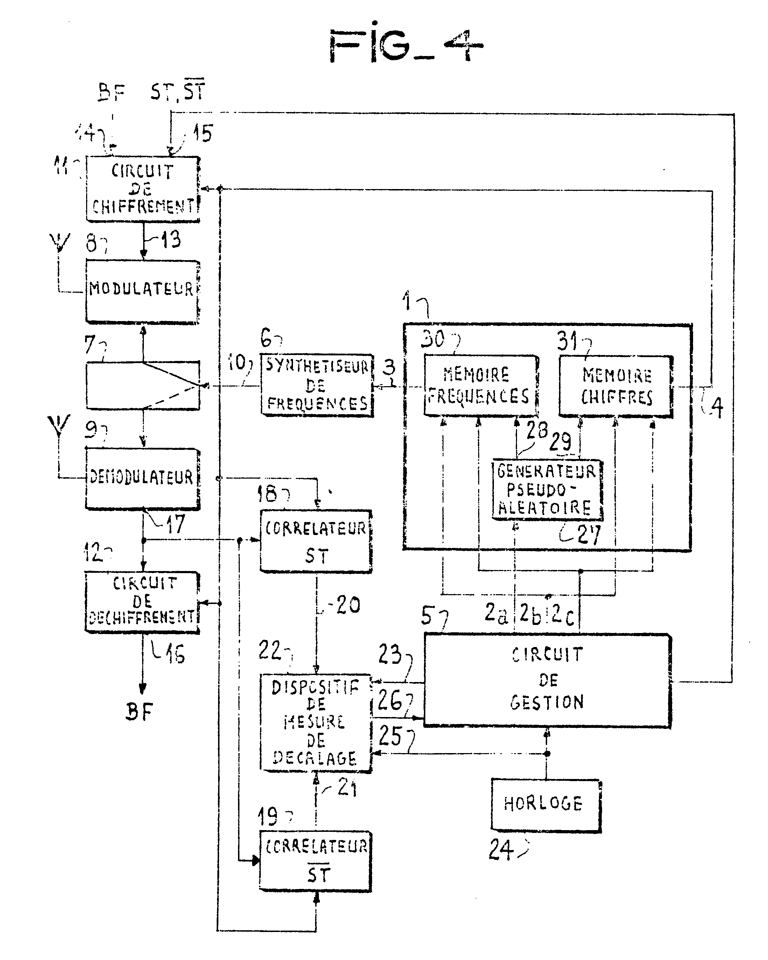

La figure 4 représente le schéma synoptique d'un émetteur-récepteur destiné à la mise en œuvre du procédé de synchronisation selon l'invention. Il comprend, pour l'émission, une entrée de signal BF, 14, reliée à l'entrée de signal d'un circuit de chiffrement 11, dont la sortie 13 fournit le signal BF chiffré à l'entrée de signal d'un modulateur 8 recevant sur sa seconde entrée le signal porteur à la fréquence d'émission d'un commutateur émission-réception 7, la sortie de ce modulateur étant reliée à une antenne d'émission.

De même, pour la réception le dispositif comporte une antenne de réception relié à l'entrée d'un démodulateur 9 ayant une entrée de signal porteur reliée à la seconde sortie du commutateur 7, la sortie 17 de ce démodulateur étant reliée à l'entrée de signal chiffré d'un circuit de déchiffrement 12 dont la sortie 16 délivre le signal BF en clair.

L'émetteur-récepteur comprend de plus un dispositif générateur de données aléatoires 1. Une série de ces données, disponibles sur sa sortie 3, est transmise à un synthétiseur de fréquences 6 qui convertit ces données en fréquences aléatoires disponibles à sa sortie 10. Ces fréquences sont transmises via le commutateur d'émission-réception 7, soit au modulateur 8, soit au démodulateur 9 selon que le poste est en position émission, ou en position de veille ou de réception. Une deuxième série de données est disponible sur la sortie 4 du générateur de données. Cette série détermine les valeurs de chiffre associées aux valeurs de fréquence. La distribution dans le temps des données aléatoires sur les sorties 3 et 4 du dispositif propre à établir les lois de trafic et de veille est réalisée par un circuit de gestion à microprocesseur, 5, relié au dispositif générateur 1 par une liaison multiple 2 (2a, 2b, 2c). La structure interne de ce générateur et ses relations fonctionnelles avec l'organe de gestion seront décrites ci-après. Les données de chiffres sont transmises au circuit de chiffrement 11 et au circuit de déchiffrement 12. Pour la détection des séquences de synchronisation émises par un poste en position d'émission, chaque poste comporte en outre un corrélateur de mots ST, 18, et un corrélateur de mots $\overline{ST}$ 19 dont les entrées de signal sont reliées à la sortie du démodulateur 9. Ces corrélateurs comportent en outre des entrées de chiffre relié à la sortie chiffre 4 du générateur de données aléatoires. Ceci permet aux corrélateurs de chiffrer les mots ST ou $\overline{ST}$ mis en mémoire respectivement dans des registres de référence de ces corrélateurs. Les sorties 20 et 21 des corrélateurs, délivrent, lorsque se présente un mot ST ou $\overline{ST}$, un top donnant un repère de l'instant de réception de ce mot.

Ce top est transmis à une entrée d'un dispositif de mesure de décalage 22. Ce dispositif reçoit de l'organe de gestion, par la liaison 23, des tops générés localement repérant, sur le déroulement interne des lois de veille, la position dans le temps des mots ST. La mesure du décalage consiste à mesurer l'intervalle de temps entre un top généré localement et celui en provenance de l'un des corrélateurs. Le premier top présent déclenche un compteur d'impulsions à la fréquence des bits de transmission, ces impulsions sont fournies par une horloge locale 24 et appliquées à l'entrée 25 du dispositif de mesure de décalage. Le second top présent arrête le compteur dont le contenu indique alors la mesure du décalage. Ce contenu correspond à un décalage en retard du récepteur sur l'émetteur si le top en provenance d'un corrélateur déclenche le compteur. Il correspond à un décalage en avance si le top généré localement déclenche le compteur. La fin du palier de veille provoque la remise à zéro du compteur chronomètre. Si cette remise à zéro survient avant qu'un top en provenance d'un corrélateur ne provoque l'arrêt du compteur, aucune information d'erreur n'est transmise et l'état de veille est conservé. L'information de recalage, subordonnée à la réception d'un mot ST ou $\overline{ST}$, indique également la réception d'un appel et constitue, pour le circuit de gestion, l'information de passage à la loi de trafic pour un temps prédéterminé. La réception au cours d'un message d'un mot ST provoque une information de recalage de valeur nulle qui réinitialise néanmoins la période de maintien de la loi de trafic.

L'oscillateur d'horloge 24 est également connecté au circuit de gestion 5 et pilote également le déroulement du programme de son microprocesseur. Ce circuit de gestion comporte également un compteur diviseur donnant à partir de l'oscillateur, des tops à la période T déterminant les transitions de la loi de trafic. Il comporte un compteur des durées de silence qui détermine les instants de passage d'une loi d'indice donnée à une loi d'indice immédiatement supérieur. Le microprocesseur est programmé pour commander les étapes du déroulement du procédé de synchronisation décrit précédemment.

Le dispositif générateur de données aléatoires 1 comprend un générateur pseudo-aléatoire 27 dont une entrée d'horloge est reliée à la sortie d'horloge 2a du circuit de gestion 5. Ce générateur 27 a deux sorties de données 28 et 29 reliées à des mémoires 30 et 31 comportant chacun $K_n$ registres mémoires affectés d'adresses numérotées de 0 à $K_n$. Ces mémoires sont reliées au circuit de gestion par une liaison d'adressage d'écriture 2b recevant un signal de période T et par une liaison de lecture 2c. Les sorties de ces mémoires sont les sorties 3 et 4 du générateur 1. Les tops de déclenchement appliqués sur l'entrée d'horloge 2a provoquent l'avance pas à pas du générateur pseudo-aléatoire interne 27. Les données disponibles sur les liaisons 28 et 29 sont stockées respectivement dans les mémoires 30 et 31 à une adresse incrémentée d'une unité à chaque top de déclenchement fourni par la liaison 2b. L'adresse $A_m$ est émise après un top H, l'adresse $A_{m+1}$ est émise après le top (H + 1).

Une nouvelle données introduite dans le registre à une adresse effacera la donnée stockée au cycle précédent à cette même adresse. Dans ces

mémoires, les $K_n$ dernières données de deux séries aléatoires destinées à établir les valeurs de fréquence et de chiffre sont ainsi disponibles. Un adressage de lecture programmé des registres des mémoires permet d'obtenir, sur les sorties 3 et 4 du dispositif, des données aléatoires distribuées dans le temps propre à établir les différentes lois de trafic et de veille du procédé selon l'invention.

A chaque durée élémentaire T d'un palier correspond une lecture des données aléatoires stockées dans les mémoires à une adresse donnée, déclenchée par un top H. A titre d'exemple, en limitant le nombre des lois de veille à 2, $L_1$ et $L_2$ avec un nombre $K_1$ égal à 3 pour $L_1$, et $K_2 = 3 \times 5 = 15$ pour $L_2$, les mémoires 30 et 31 doivent avoir 15 registres.

Les données aléatoires sont écrites dans ces registres au rythme T aux adresses successives $A_m$, m = 1 à 15.

Pour l'établissement de la loi de trafic L, ces registres sont lus successivement au rythme T avec un retard par rapport à l'écriture égal à une période T, un registre d'adresse donné étant toujours lu le premier pour un cycle de lecture des mémoires de durée $K_n T$.

Pour l'établissement des lois de veille successives, pour que les changements de lois soient toujours synchrones, le cycle de lecture de la mémoire correspondant à la loi $L_i$ en cours est terminé et la loi de veille suivante n'est établie que lors du cycle de lecture suivant de la mémoire.

Pour l'établissement de la première loi de veille, $L_1$, la lecture de chaque registre d'adresse $A_m$ est répétée pendant $K_1$ périodes T et le registre lu suivant a pour adresse $(A_m + K_1)$ (modulo $K_n$), avec toujours la même adresse initiale lue pour chaque cycle de lecture de durée $K_n T$.

De même pour l'établissement d'une loi de veille $L_i$, la lecture de chaque registre d'adresse $A_m$ est répétée pendant $K_i$ périodes T et le registre lu suivant a pour adresse $(A_m + K_i)$ (modulo Kn) avec toujours la même adresse initiale lue pour chaque cycle de lecture.

Pour la loi $L_n$, c'est toujours le même registre qui est lu.

Pour un poste appelant pour lequel la loi de veille en cours est $L_i$, l'établissement de la séquence d'appel décrite ci-dessus est obtenu en lisant au rythme T les données contenues dans les $Q_i$ registres d'adresses

$$\ldots A_m - 2K_{i-1},\ A_m - K_{i-1},\ A_m,\ A_M + K_{i-1},\ A_m + 2K_{i-1}, \ldots$$

Les $\dfrac{Q_i - 1}{2}$ premières données et les $\dfrac{Q_i - 1}{2}$ dernières données issues des mémoires 30 et 31 sont les valeurs de fréquences et les valeurs de chiffres utilisées pour l'émission des mots de synchronisation $\overline{ST}$, les données lues à l'adresse $A_m$ dans les deux mémoires étant respectivement la valeur de fréquence et la valeur de chiffre utilisée pour l'émission du mot de synchronisation ST. Cette séquence est répétée par la lecture des registres d'adresses décalées de $K_1$ par rapport aux adresses de la première séquence d'appel, et cela au moins

$$Q_{i+1} = \frac{K_{i+1}}{K_i}$$

fois pour que la synchronisation des récepteurs soit possible dans tous les cas où les lois de veille des postes ne diffèrent pas de plus d'une loi.

Une lecture programmée des mémoires permet également au circuit de gestion, le rattrapage d'un décalage de M paliers élémentaires de durée T, détecté par la réception d'un mot ST ou $\overline{ST}$. En ce qui concerne la lecture des registres, un décalage de M pas élémentaires de durée T en plus ou en moins, sur les séquences en cours, rétablit le synchronisme. En ce qui concerne le recalage de l'avance pas à pas du générateur pseudo-aléatoire 27, une salve de M tops de déclenchement, dans le cas d'un décalage en retard, accompagnée d'une accélération synchrone, au rythme de cette salve, de l'adressage d'écriture, rétablit la concordance. En cas de décalage en avance, les tops de déclenchement sont supprimés ainsi que l'avance de l'adressage d'écriture, pendant M paliers de durée T.

**Revendications**

1. Procédé de synchronisation des postes émetteurs-récepteurs d'un réseau à sauts de fréquence dans lequel les postes émetteurs-récepteurs communiquent sur des fréquences porteuses maintenues pendant des paliers de durée T prédéterminée, ces fréquences variant par saut d'un palier au suivant selon une loi aléatoire de trafic générée par des moyens identiques dans tous les postes, ces moyens de génération étant associés à des horloges locales, caractérisé en ce que, pendant une durée de silence du réseau, chaque poste établit à partir de la loi de trafic pilotée par son horloge locale des lois de veille successives synchrones $L_i$ ayant des durées de paliers multiples de la durée du palier T, $K_i T$, qui augmentent d'une loi à la suivante avec la durée de silence, et tels que

$$\frac{K_i}{K_{i-1}} = Q_i,$$

et en ce que pour l'établissement d'une communication, un poste en position d'appel émet une séquence d'appel comportant au moins un groupe de mots de synchronisation, ST, émis sur des fréquences porteuses correspondant aux paliers de sa loi de veille $L_i$ en cours, ayant une durée T et émis dans un intervalle T centré par rapport à la durée $K_i T$ du palier de la loi de veille en cours.

2. Procédé selon la revendication 1, caractérisé en ce que l'estimation de la durée de silence étant déterminée à partir de l'horloge locale de chaque poste et pouvant varier d'un poste à l'autre et les lois de veille à un instant donné étant susceptibles d'être des lois de veilles d'indices différant de une unité au plus dans la succession des lois de veille, la séquence d'appel comporte en outre $Q_{i-1}$ mots de synchronisation d'un second type $\overline{ST}$, de durée T, encadrant les mots du premier type et transmis sur des fréquences porteuses correspondant aux paliers de la loi de veille $L_{i-1}$ précédente encadrant le palier déterminant la fréquence de transmission du mot ST du premier type.

3. Procédé selon l'une des revendications 1 et 2, caractérisé en ce que les messages transmis étant chiffrés, les valeurs de chiffre varient en même temps que les fréquences pour la loi de trafic et les lois de veille successives.

4. Procédé selon l'une des revendications précédentes, caractérisé en ce que chaque poste du réseau autre que le poste appelant détermine, à partir de ce qu'il a détecté dans la séquence d'appel du poste appelant, le décalage temporel entre sa loi de veille en cours et celle du poste appelant et le compense en décalant sa loi de trafic d'une durée égale au décalage déterminé pour qu'elle coïncide avec celle du poste appelant.

5. Procédé selon la revendication 4, caractérisé en ce que le décalage de la loi de trafic d'un poste commande également le passsage de ce poste sur cette loi de trafic ainsi synchronisée.

6. Poste émetteur-récepteur destiné à la mise en œuvre du procédé de synchronisation selon l'une des revendications précédentes, comportant des moyens de génération (1, 5) de la loi de trafic, et des lois de veille successives qui en sont déduites, à partir d'une horloge locale (24), des moyens de détection (18, 19) des mots de synchronisation, et un dispositif de mesure (22) du décalage entre l'instant de détection d'un mot de synchronisation émis par un poste appelant et l'instant où ce mot aurait été généré localement, les moyens de génération (1, 5) de la loi de trafic étant commandés lors de la détection d'un décalage pour décaler la loi de trafic de ce poste du décalage mesuré.

**Patentansprüche**

1. Verfahren zur Synchronisation von Sende/Empfangs-Stationen eines Frequenzsprung-Netzes, worin die Sende/Empfangs-Stationen auf Trägerfrequenzen kommunizieren, die während Stufen einer vorbestimmten Dauer T aufrechterhalten werden, wobei diese Frequenzen sprungweise von einer Stufe zur nächsten nach einem Verkehrs-Zufallsgesetz verändert werden, das durch Mittel erzeugt wird, die für alle Stationen dieselben sind, wobei diese Generatormittel lokalen Zeitbasen zugeordnet sind, dadurch gekennzeichnet, daß während einer Stilleperiode des Netzes jede Station aus dem durch seine lokale Zeitbasis gesteuerten Verkehrsgesetz aufeinanderfolgende synchrone Bereitschaftszustand-Gesetze $L_i$ erzeugt, die Stufendauern aufweisen, welche Mehrfache der Dauer der Stufe T sind, nämlich $K_i T$, welche von einem Gesetz zum darauffolgenden mit der Dauer der Stille zunehmen sowie die Bedingung

$$\frac{K_i}{K_{i-1}} = Q_i,$$

erfüllen, und daß für die Herstellung einer Verbindung eine Station im Rufzustand eine Rufsequenz aussendet, welche wenigstens eine Gruppe von Synchronisationswörtern ST enthält, die auf Trägerfrequenzen ausgesendet wird, welche den Stufen des laufenden Bereitschaftszustand-Gesetzes $L_i$ entsprechen, von der Dauer T und ausgesendet in einem Intervall T, welches in bezug auf die Dauer $K_i T$ der Stufe des laufenden Bereitschaftszustand-Gesetzes zentriert ist.

2. Verfahren nach Anspruch 1, dadurch gekennzeichnet, daß die Schätzung der Stilledauer ausgehend von der lokalen Zeitbasis jeder Station bestimmt wird und von einer Station zur anderen variieren kann, wobei ferner die Bereitschaftszustand-Gesetze zu einem gegebenen Zeitpunkt Bereitschaftszustand-Gesetze sein können, deren Indizes in der Aufeinanderfolge von Bereitschaftszustand-Gesetzen sich um wenigstens eine Einheit unterscheiden, wobei die Rufsequenz ferner $Q_{i-1}$ Synchronisationswörter eines zweiten Typs $\overline{ST}$ und von der Dauer T umfaßt, welche die Wörter der ersten Art einrahmen, und welche auf Trägerfrequenzen übertragen wird, die den Stufen des vorausgehenden Bereitschaftszustand-Gesetzes $L_{i-1}$ entsprechen und die Stufe einrahmen, der die Übertragungsfrequenz des Wortes ST vom ersten Typ bestimmt.

3. Verfahren nach Anspruch 1 oder 2, dadurch gekennzeichnet, daß die Nachrichten verschlüsselt übertragen werden und die Schlüsselwerte gleichzeitig mit den Frequenzen für das Verkehrsgesetz und die aufeinanderfolgenden Bereitschaftszustand-Gesetze variieren.

4. Verfahren nach einem der vorstehenden Ansprüche, dadurch gekennzeichnet, daß jede Station des Netzes außer der rufenden Station ausgehend von dem, was sie in der Rufsequenz der rufenden Station erfaßt hat, die Zeitverschiebung zwischen ihrem laufenden Bereitschaftszustand-Gesetz und dem der rufenden Station bestimmt und sie kompensiert, indem sie ihr Verkehrsgesetz um eine Dauer verschiebt, die gleich der festgestellten Verschiebung ist, damit sie mit der der rufenden Station übereinstimmt.

5. Verfahren nach Anspruch 4, dadurch gekennzeichnet, daß die Verschiebung des Verkehrsgesetzes einer Station ferner den Übergang dieser Station auf das so synchronisierte Verkehrsgesetz steuert.

6. Sende/Empfangs-Station zur Durchführung des Synchronisationsverfahrens nach einem der vorstehenden Ansprüche, mit Generatormitteln (1, 5) zur Erzeugung des Verkehrsgesetzes und der aufeinanderfolgenden, davon ausgehend von einer lokalen Zeitbasis (24) abgeleiteten Bereitschaftszustand-Gesetze, Detektionsmitteln (18, 19) zur Erfassung der Synchronisationswörter und einer Meßvorrichtung (22) zur Messung der Verschiebung zwischen dem Erfassungszeitpunkt eines Synchronisationswortes, welches von einer rufenden Station ausgesendet wird, und dem Zeitpunkt, zu dem dieses Wort lokal erzeugt worden wäre, wobei die Generatormittel (1, 5) zur Erzeugung des Verkehrsgesetzes während der Erfassung einer Verschiebung gesteuert werden, um das Verkehrsgesetz dieser Station um die gemessene Verschiebung zu verschieben.

## Claims

1. Method of synchronisation of transceiver stations of a frequency jump network wherein the transceiver stations communicate at carrier frequencies which are maintained during steps of the predetermined duration T, these frequencies varying stepwise from one step to the next in accordance with a random traffic law generated by means which are identical in all of the stations, these generation means being associated with local clocks, characterized in that, during a period of silence of the network, each station establishes, from the traffic law directed by its local clock, successive synchronous standby laws $L_i$ having step durations which are multiples of the duration of the step T, i. e. $K_iT$, which increase from one law to the following with the duration of silence, and such that

$$\frac{K_i}{K_{i-1}} = Q_i,$$

and in that a station in the condition of calling, in order to establish a communication, transmits a call sequence comprising at least of group of synchronisation words ST transmitted on carrier frequencies corresponding to the steps of its current stand-by law $L_i$, having a duration T and transmitted with an interval T centered with respect to the duration $K_iT$ of the step of the current stand-by law.

2. Method according to claim 1, characterized in that the estimation of the duration of silence being determined from the local clock of each station and being susceptible to vary from one station to another, and the stand-by laws at one given moment being susceptible to be stand-by laws having indices differring by one unit at the most within the succession of stand-by laws, the call sequence further comprising $Q_{i-1}$ synchronisation words of a second type $\overline{ST}$ of the duration T and framing the words of the first type and transmitted on carrier frequencies corresponding to the steps of the preceding stand-by law $L_{i-1}$ framing the step determining the transmission frequency of the word ST of the first type.

3. Method according to any of claims 1 and 2, characterized in that the transmitted messages being coded, the code values vary simultaneously with the frequencies for the traffic law and the successive stand-by laws.

4. Method according to any of the preceding claims, characterized in that each station of the network other than the calling station determines from what it has detected within the call sequence of the calling station, the time shift between its current stand-by law and that of the calling station, and compensates for it by shifting its traffic law by a duration equal to the determined shift for being coincident with that of the calling station.

5. Method according to claim 4, characterized in that the shift of the traffic law of a station further controls this station changing to this thus synchronised traffic law.

6. Transceiver station for carrying out the synchronisation method according to any of the preceding claims, comprising means (1, 5) for generating the traffic law and the successive stand-by laws derived therefrom on the basis of a local clock (24), means (18, 19) for detecting synchronisation words and a device (22) for measuring the shift between the moment of detection of a synchronisation word transmitted by a calling station and the moment where this word would have been locally generated, the traffic law generation means (1, 5) being controlled upon the detection of a shift for shifting the traffic law of this station by the measured shift.

# FIG_1

A

L

L₁

L₂

L₃...,Lᵢ,..Lₙ-2 SUPERPOSEES

# FIG_2

L, L₁,...Lᵢ..,Lₙ-3
NON DISCERNABLES

Lₙ-2

Lₙ-1

Lₙ

RANG DE TIRAGE
DES FREQUENCES

TEMPS

A

# FIG_3

Li et Li-1
DE L'EMETTEUR

ST et ST(R₁)

RECEPTEUR N°1
VEILLE Li-1

ST

N° FREQUENCES

TEMPS

ST        ST(R₂)

t₂

EMETTEUR        RECEPTEUR N°2
VEILLE Li

ST

2eme APPEL

ST

ST

ST(R₃)

RECEPTEUR N°3
VEILLE Li+1

ST

t₃

ST

EMETTEUR

ST

1er APPEL

- - - - - EMETTEUR   (LOI DE VEILLE)
———— EMETTEUR   (SEQUENCE EMISE)
———— RECEPTEURS (LOIS DE VEILLE)

FIG_4